# EUROPÄISCHE PATENTSCHRIFT

(11) **EP 3 295 779 B1**
(45) Veröffentlichungstag und Bekanntmachung des Hinweises auf die Patenterteilung: **24.02.2021**
(21) Anmeldenummer: 17191554.9
(22) Anmeldetag: 18.09.2017
(51) Int. Cl.: A01B 59/00, A01B 59/06

(54) **OBERLENKER FÜR EINEN DREIPUNKT-KRAFTHEBER EINES LANDWIRTSCHAFTLICHEN TRAKTORS**
UPPER GUIDE FOR A THREE POINT POWER LIFT OF AN AGRICULTURAL TRACTOR
BRAS SUPÉRIEUR D'ATTELAGE POUR UN BRAS DE RELEVAGE À TROIS POINTS D'UN TRACTEUR AGRICOLE

(30) Priorität: 20.09.2016 DE 102016217944
(43) Veröffentlichungstag der Anmeldung: 21.03.2018
(73) Patentinhaber: Deere & Company, Moline, IL 61265 (US)
(72) Erfinder: Gresch, Valentin, 68163 Mannheim (DE); Kremmer, Martin, 68163 Mannheim (DE); David, Harald, 68163 Mannheim (DE)
(74) Vertreter: Dehnhardt, Florian Christopher

(56) Entgegenhaltungen:
- EP-A1- 2 769 607
- WO-A1-2013/026661
- DE-A1- 2 943 315
- DE-A1-102015 201 982
- DE-U1-202015 008 482
- DE-U1-202016 003 163
- US-A- 4 236 613
- US-A- 6 041 582
- US-B1- 6 234 508

## Beschreibung

Die Erfindung betrifft einen längenverstellbaren Oberlenker für einen Dreipunkt-Kraftheber eines landwirtschaftlichen Traktors, mit einem Zylinderkorpus, der einen Zylinderboden mit einem Befestigungsauge aufweist, an dem ein Kreuzgelenk zur traktorseitigen Befestigung schwenkbar angebracht ist.

Derartige längenverstellbare Oberlenker dienen der Veränderung des Anstellwinkels eines an dem Dreipunkt-Kraftheber angebrachten landwirtschaftlichen Anbaugeräts. In dem Zylinderkorpus kann zum Zwecke der Längenverstellung des Oberlenkers entweder eine drehbare Gewindespindel oder aber ein Hydraulikkolben längsverstellbar geführt sein. In letzterem Fall ist der Zylinderkorpus als Hydraulikzylinder ausgebildet, der über zugehörige Hydraulikleitungen mit einer hydraulischen Steuerung des landwirtschaftlichen Traktors in Verbindung steht. Neben dem längenverstellbaren Oberlenker weist der Dreipunkt-Kraftheber des Weiteren rechte und linke Unterlenker auf, die über jeweilige Hubstreben mit hydraulisch schwenkbaren Hubarmen verbunden sind, sodass sich diese durch Betätigung der hydraulischen Steuerung des landwirtschaftlichen Traktors heben und senken lassen. Der Dreipunkt-Kraftheber kann hierbei im Heck- oder Frontbereich des landwirtschaftlichen Traktors vorgesehen sein und dort der Anbringung eines landwirtschaftlichen Anbau- oder Zusatzgeräts dienen.

Für diverse Anwendungen, wie beispielsweise zur Gewichts- bzw. Schwerpunktlagenbestimmung eines an dem Dreipunkt-Kraftheber befindlichen Anbaugeräts, ist eine Kenntnis des aktuellen Winkels des Oberlenkers gegenüber dem landwirtschaftlichen Traktor bzw. einem von diesem umfassten Traktorchassis von Interesse. Im einfachsten Fall ist zu diesem Zweck ein Winkelsensor in Form eines Potentiometers oder inkrementalen Drehgebers vorgesehen, der mechanisch zwischen einer traktorseitigen Befestigungsstelle und dem Kreuzgelenk des Oberlenkers eingebaut ist. Daneben besteht die Möglichkeit, den Winkel des Oberlenkers aufgrund eines Vergleichs der gegenüber einem traktorseitigen Bezugspunkt am Oberlenker auftretenden Beschleunigungen bzw. Drehraten vorzunehmen. Hierzu ist auf der Außenseite des Oberlenkers ein entsprechender Beschleunigungssensor angebracht. Aufgrund ihrer Bauweise bzw. ihres Anbringungsorts sind die vorgenannten Sensoren jedoch vergleichsweise empfindlich gegenüber äußeren Beschädigungen.

Die Schriften US 6 234 508 B1, US 6 041 582 A, US 4 236 613 A, EP 2 769 607 A1, DE 20 2015 008482 U1, DE 29 43 315 A1, WO 2013/026661 A1 und DE 20 2016 003163 U1 beschreiben bekannte Oberlenker; die Schrift DE 10 2015 201982 A1 beschreibt einen bekannten Inertialsensor.

Es ist daher Aufgabe der vorliegenden Erfindung, einen Oberlenker der eingangs genannten Art dahingehend weiterzubilden, dass dieser eine robuste Anordnung von Sensoren zur Winkelmessung erlaubt.

Diese Aufgabe wird durch einen Oberlenker für einen Dreipunkt-Kraftheber eines landwirtschaftlichen Traktors mit den Merkmalen des Patentanspruchs 1 und durch ein Verfahren zur Betriebszustandsklassifizierung eines an einem landwirtschaftlichen Traktor angebrachten Oberlenkers mit den Merkmalen des Patentanspruchs 4 gelöst.

Der Oberlenker für einen Dreipunkt-Kraftheber eines landwirtschaftlichen Traktors umfasst einen Zylinderkorpus, der einen Zylinderboden mit einem Befestigungsauge aufweist, an dem ein Kreuzgelenk zur traktorseitigen Befestigung schwenkbar angebracht ist. Des Weiteren ist in dem Zylinderboden eine von außen zugängliche Einschuböffnung zur Aufnahme eines Sensormoduls ausgebildet. Ein darin montiertes Sensormodul ist verlässlich vor äußeren Beschädigungen geschützt.

Bei dem Sensormodul handelt es sich eine inertiale Messeinheit insbesondere in Gestalt eines sogenannten MEMS-Moduls (MEMS - Mikro-elektro-mechanisches System), das aus Silizium hergestellte miniaturisierte Beschleunigungssensoren enthält, solche zur Messung von Linearbeschleunigungen und/oder Winkelgeschwindigkeiten bzw. insbesondere Drehraten (Gyroskopsensoren). Aufgrund der räumlichen Nähe von Beschleunigungssensor und zu erfassender Schwenkbewegung (Drehpunkt) des Oberlenkers sind besonders genaue Messergebnisse erzielbar.

Das Sensormodul weist typischerweise die Gestalt eines gekapselten Moduleinschubs auf, der das eigentliche Messsystem beherbergt sowie an seiner Außenseite einen Steckverbinder zur Stromversorgung sowie zur Herstellung einer Datenverbindung mit einer Steuerungselektronik des landwirtschaftlichen Traktors aufweist. Die Übertragung kann insbesondere digital über einen an dem Steckverbinder anschließbaren CAN-Datenbus erfolgen. Andererseits ist auch eine drahtlose Datenübertragung per Kurzstreckenfunk (Bluetooth oder dergleichen) möglich. Der Moduleinschub ist im Spritzgussverfahren hergestellt und besteht beispielsweise aus glasfaserverstärktem Kunststoff.

Der Vollständigkeit halber sei angemerkt, dass die Einschuböffnung grundsätzlich auch an anderer Stelle eines nicht erfindungsgemäßen Oberlenkers ausgebildet sein kann, so zum Beispiel im Bereich eines Fanghakens, des Hydraulikkolbens oder eines Kreuzgelenkbolzens, der das Kreuzgelenk schwenkbar mit dem Befestigungsauge verbindet. Jedoch ist angesichts der zur Verfügung stehenden Materialstärken eine Unterbringung im Kreuzgelenk vorzuziehen. Der Zylinderboden des erfindungsgemäßen Oberlenkers kann hierbei zusätzlich verstärkt bzw. verdickt ausgeführt sein.

Vorteilhafte Weiterbildungen des erfindungsgemäßen Oberlenkers gehen aus den Unteransprüchen hervor.

Die Einschuböffnung ist taschenförmig innerhalb des Zylinderbodens ausgebildet, sodass diese auf lediglich einer Seite nach außen hin geöffnet ist, mithin ein besonders guter Schutz eines darin aufgenommenen Sensormoduls gegeben ist.

Vorzugsweise bildet das Kreuzgelenk eine mit dem Befestigungsauge fluchtende erste Schwenkachse und eine dazu senkrechte zweite Schwenkachse gegenüber einer mit dem Kreuzgelenk schwenkbar verbindbaren traktorseitigen Befestigungsstelle, wobei die Einschuböffnung und damit ein darin befindliches Sensormodul in Richtung einer der beiden Schwenkachsen oder in einem definierten Winkel dazu orientiert ist. Das Sensormodul weist bevorzugt eine Anordnung von Beschleunigungssensoren auf, deren jeweilige Erfassungsbereiche mit den durch die Schwenkachsen aufgespannten Winkelebenen zusammenfallen. Die in den Sensormodulen enthaltenen Beschleunigungssensoren sind einbaufertig vorjustiert, was eine Erstmontage wie auch einen wartungsbedingten Austausch der Sensormodule vereinfacht.

Ferner kann die Einschuböffnung nach außen hin von einem Befestigungsflansch begrenzt sein, wobei der Befestigungsflansch einen planebenen Oberflächenabschnitt zur sitzdichten Anbringung des Sensormoduls bildet. Zwischen Sensormodul und Befestigungsflansch kann sich zusätzlich eine Gummidichtung befinden. Kreuzgelenk bzw. Zylinderboden sind in aller Regel als Gussteil hergestellt, wobei diese im Bereich des Befestigungsflansches plangefräst sind.

Hierbei besteht die Möglichkeit, dass an dem Befestigungsflansch Gewindeöffnungen zur Verschraubung eines an dem Sensormodul ausgebildeten Befestigungskragens eingebracht sind. Dies erleichtert die Austauschbarkeit des Sensormoduls insbesondere bei Durchführung von Wartungs- und Reparaturarbeiten. Der Befestigungskragen kann einstückiger Bestandteil des im Spritzgussverfahren hergestellten Moduleinschubs sein.

Der erfindungsgemäße Oberlenker mit einer darin integrierten, also in der Einschuböffnung befindlichen inertialen Messeinheit kann insbesondere zur Durchführung eines Verfahrens zur Betriebszustandsklassifizierung des Oberlenkers an einem landwirtschaftlichen Traktor dienen. Zu diesem Zweck werden die seitens der inertialen Messeinheit bereitgestellten Messdaten mit denjenigen einer traktorfesten inertialen Messeinheit verglichen, um nach Maßgabe des Vergleichs der in den Messdaten jeweils enthaltenen Linearbeschleunigungen und/oder Winkelgeschwindigkeiten in Bezug auf die traktorseitige Befestigungsstelle die aktuelle Winkellage des Oberlenkers in vertikaler Richtung sowie deren zeitliche Änderung zu ermitteln. Davon ausgehend lassen sich unter anderem die Betriebszustände "Transportstellung", "Anbauvorgang" sowie "Anbaustellung" verlässlich unterscheiden.

So nimmt der Oberlenker in der Transportstellung eine feste, nahezu senkrechte Winkellage gegenüber dem landwirtschaftlichen Traktor ein. Während des Anbauvorgangs eines landwirtschaftlichen Anbau- oder Zusatzgeräts bewegt der Bediener den Oberlenker, wodurch sich dessen Winkellage gegenüber dem landwirtschaftlichen Traktor in charakteristischer Weise zeitlich verändert. Ist der Oberlenker an dem landwirtschaftlichen Anbau- oder Zusatzgerät angebracht, so nimmt der Oberlenker eine feste, nahezu horizontale Winkellage gegenüber dem landwirtschaftlichen Traktor ein, die sich von der nahezu senkrechten Winkellage in der Transportstellung eindeutig unterscheidet.

Eine Analyse der aktuellen Winkellage des Oberlenkers wie auch der zeitlichen Änderung erlaubt damit auf einfache Weise eine Betriebszustandsklassifizierung des Oberlenkers. Die solchermaßen gewonnenen Informationen werden dem Bediener beispielsweise auf einem in einer Traktorkabine befindlichen Display dargeboten.

Der erfindungsgemäße Oberlenker wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein Ausführungsbeispiel eines erfindungsgemäßen Oberlenkers für einen Dreipunkt-Kraftheber eines landwirtschaftlichen Traktors,
- Fig. 2: eine perspektivische Ansicht eines von dem Oberlenker gemäß Fig. 1 umfassten Kreuzgelenks,
- Fig. 3: eine perspektivische Ansicht eines Sensormoduls zur Aufnahme innerhalb einer in dem Kreuzgelenk gemäß Fig. 2 ausgebildeten Einschuböffnung,
- Fig. 4: eine perspektivische Ansicht des in Fig. 2 dargestellten Kreuzgelenks mit einem in der Einschuböffnung montierten Sensormodul gemäß Fig. 3,
- Fig. 5: eine perspektivische Ansicht eines von dem Oberlenker gemäß Fig. 1 umfassten Zylinderbodens,
- Fig. 6: eine perspektivische Ansicht eines Sensormoduls zur Aufnahme innerhalb einer in dem Zylinderboden gemäß Fig. 5 ausgebildeten Einschuböffnung, und
- Fig. 7: eine perspektivische Ansicht des in Fig. 5 dargestellten Zylinderbodens mit einem in der Einschuböffnung montierten Sensormodul gemäß Fig. 6.

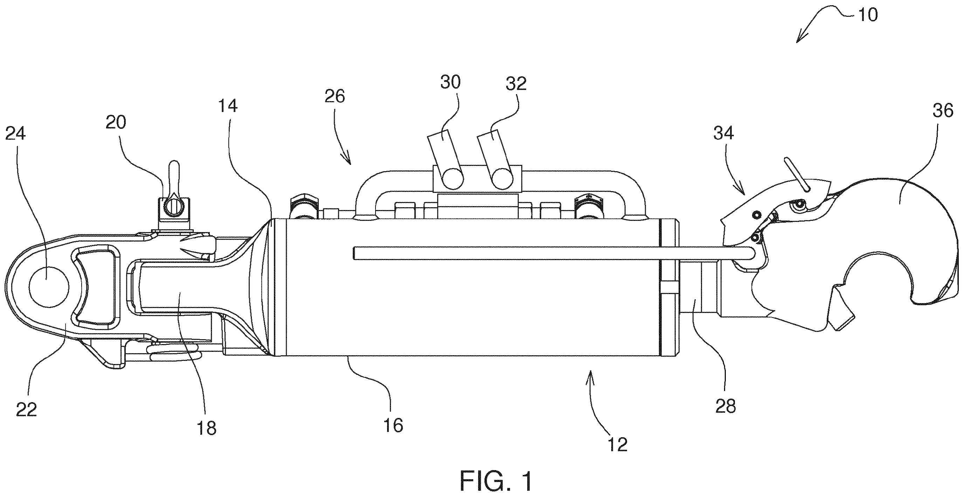

Fig. 1 zeigt ein Ausführungsbeispiel eines erfindungsgemäßen Oberlenkers für einen Dreipunkt-Kraftheber eines landwirtschaftlichen Traktors.

Der Oberlenker 10 umfasst einen Zylinderkorpus 12 mit einem Zylinderboden 14, der einstückiger Bestandteil des Zylinderkorpus 12 ist. Alternativ ist auch eine zweiteilige Ausbildung vorstellbar, bei der der Zylinderboden 14 mit einer Basis 16 des Zylinderkorpus 12 druckdicht verschraubt oder verpresst ist. Der Zylinderboden 14 umfasst ein Befestigungsauge 18, an dem mittels eines Kreuzgelenkbolzens 20 ein Kreuzgelenk 22 schwenkbar angebracht ist. Eine an dem Kreuzgelenk 22 vorgesehene Aufnahmeöffnung 24 dient der Herstellung einer schwenkbaren Verbindung des Oberlenkers 10 mit einer (nicht dargestellten) Befestigungsstelle des landwirtschaftlichen Traktors.

Im vorliegenden Fall ist der Zylinderkorpus 12 als Hydraulikzylinder 26 mit einem darin geführten Hydraulikkolben 28 ausgebildet. Der Hydraulikkolben 28 steht über zugehörige Hydraulikleitungen 30, 32 mit einer (nicht dargestellten) hydraulischen Steuerung des landwirtschaftlichen Traktors in Verbindung, was eine Längenverstellung des Oberlenkers 10 möglich macht. Ein in einem Endbereich 34 des Hydraulikkolbens 28 vorgesehener Fanghaken 36 dient der Anbringung einer oberen Kupplungsstelle eines landwirtschaftlichen Anbau- oder Zusatzgeräts, also eines Bodenbearbeitungsgeräts, eines Zusatzgewichts, oder dergleichen.

### Erste Ausführungsform

Nachfolgend wird eine erste Ausführungsform eines nicht erfindungsgemäßen Oberlenkers 10 beschrieben.

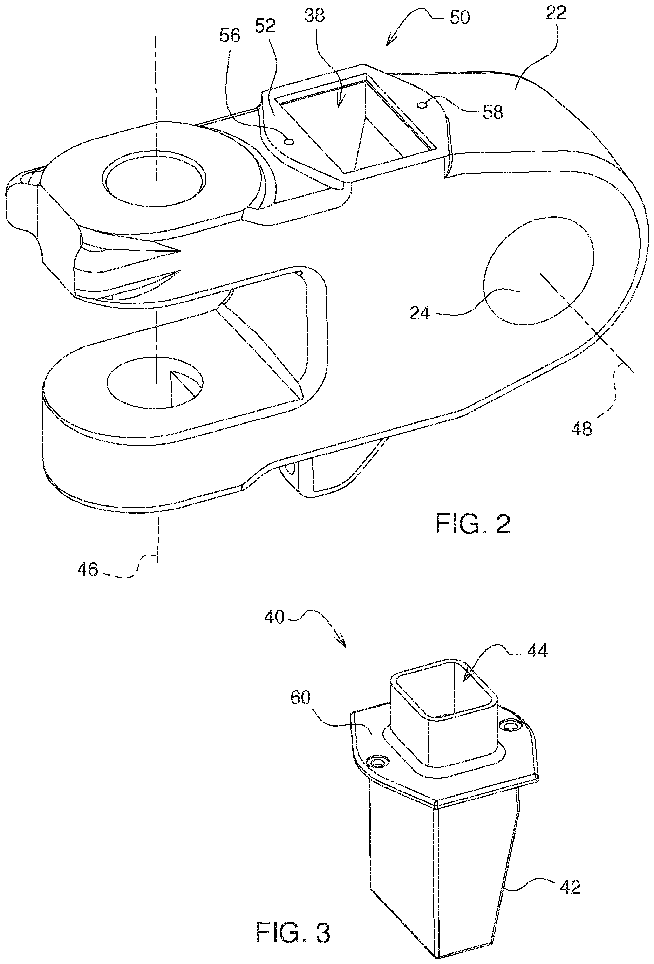

Fig. 2 zeigt eine perspektivische Ansicht des von dem Oberlenker 10 umfassten Kreuzgelenks 22. Beispielsgemäß ist in dem Kreuzgelenk 22 eine von außen zugängliche taschenförmige Einschuböffnung 38 zur Aufnahme eines in Fig. 3 perspektivisch dargestellten Sensormoduls 40 ausgebildet.

Bei dem Sensormodul 40 handelt es sich um eine inertiale Messeinheit in Gestalt eines sogenannten MEMS-Moduls (MEMS - Mikro-elektro-mechanisches System), das aus Silizium hergestellte miniaturisierte Beschleunigungssensoren enthält, insbesondere solche zur Messung von Linearbeschleunigungen und/oder Winkelgeschwindigkeiten bzw. Drehraten (Gyroskopsensoren).

Genauer gesagt weist das Sensormodul 40 die Gestalt eines gekapselten Moduleinschubs 42 auf, der das eigentliche Messsystem beherbergt sowie an seiner Außenseite einen Steckverbinder 44 zur Stromversorgung sowie zur Herstellung einer Datenverbindung mit einer Steuerungselektronik des landwirtschaftlichen Traktors aufweist. Die Übertragung kann insbesondere digital über einen an dem Steckverbinder 44 anschließbaren CAN-Datenbus erfolgen. Andererseits ist auch eine drahtlose Datenübertragung per Kurzstreckenfunk (Bluetooth oder dergleichen) möglich. Der Moduleinschub 42 ist im Spritzgussverfahren hergestellt und besteht aus glasfaserverstärktem Kunststoff.

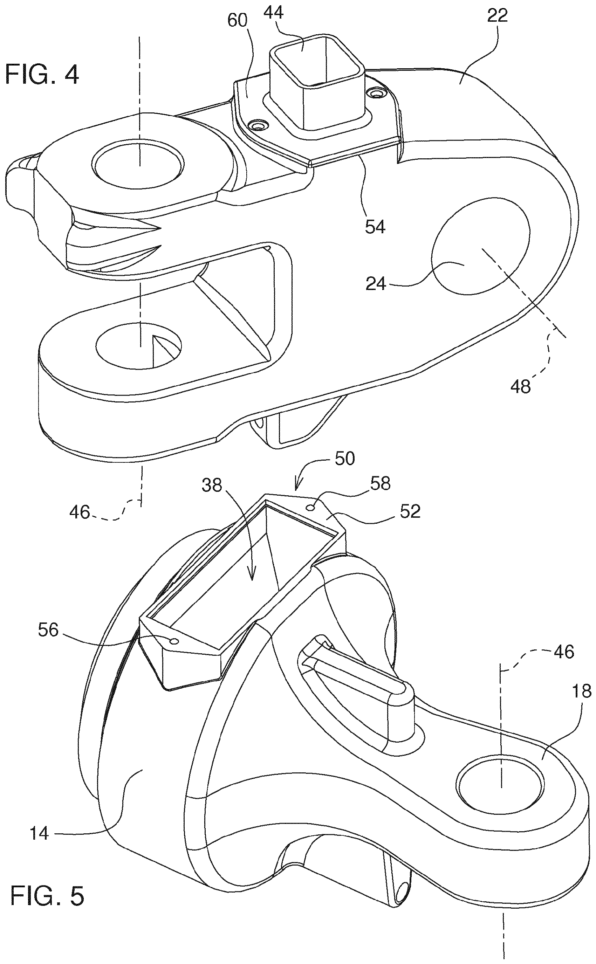

Fig. 4 zeigt eine perspektivische Ansicht des Kreuzgelenks 22 mit in der Einschuböffnung 38 montiertem Sensormodul 40.

Im vorliegenden Fall bildet das Kreuzgelenk 22 eine mit dem Befestigungsauge 18 fluchtende erste Schwenkachse 46 und eine dazu senkrechte zweite Schwenkachse 48 gegenüber der mit dem Kreuzgelenk 22 schwenkbar verbindbaren traktorseitigen Befestigungsstelle, wobei die Einschuböffnung 38 und damit das darin befindliche Sensormodul 40 in Richtung der ersten Schwenkachse 46 orientiert ist. Die jeweiligen Erfassungsbereiche der in dem Sensormodul 40 angeordneten Beschleunigungssensoren fallen hierbei mit den durch die Schwenkachsen 46, 48 aufgespannten Winkelebenen zusammen. In aller Regel soll jedoch lediglich eine vertikale Schwenkbewegung des Oberlenkers 10 gegenüber der traktorseitigen Befestigungsstelle erfasst werden, sodass der Erfassungsbereich der Beschleunigungssensoren in einem solchen Fall auf die durch die zweite Schwenkachse 48 aufgespannte Winkelebene reduziert ist.

Gemäß Fig. 2 ist die Einschuböffnung 38 nach außen hin von einem Befestigungsflansch 50 begrenzt, wobei der Befestigungsflansch 50 einen planebenen Oberflächenabschnitt 52 zur sitzdichten Anbringung des Sensormoduls 40 bildet. Zwischen Sensormodul 40 und Befestigungsflansch 50 befindet sich zusätzlich eine Gummidichtung 54. Das Kreuzgelenk 22 ist als Gussteil hergestellt, wobei dieses im Bereich des Befestigungsflansches 50 plangefräst ist.

An dem Befestigungsflansch 50 sind Gewindeöffnungen 56, 58 zur Verschraubung eines an dem Sensormodul 40 ausgebildeten Befestigungskragens 60 eingebracht. Der Befestigungskragen 60 ist einstückiger Bestandteil des im Spritzgussverfahren hergestellten Moduleinschubs 42.

### Zweite Ausführungsform

Im Folgenden wird eine zweite Ausführungsform des erfindungsgemäßen Oberlenkers 10 beschrieben.

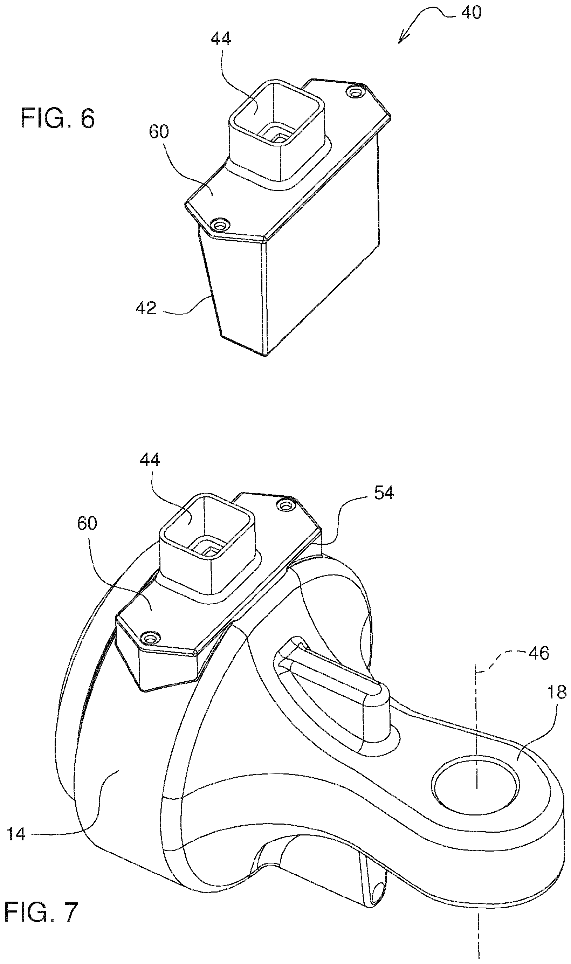

Diese unterscheidet sich von der ersten Ausführungsform lediglich dahingehend, dass die taschenförmige Einschuböffnung 38 nicht etwa im Kreuzgelenk 22, sondern im Zylinderboden 14 ausgebildet ist. Der Zylinderboden 14 kann zu diesem Zweck verstärkt bzw. verdickt ausgeführt werden, was aus der perspektivischen Ansicht gemäß Fig. 5 ersichtlich ist. Das in der Einschuböffnung 38 aufgenommene Sensormodul 40 ist bezüglich seines Aufbaus bzw. seiner Funktion mit demjenigen der ersten Ausführungsform vergleichbar, weist jedoch, wie in Fig. 6 und 7 erkennbar ist, eine dem Einbauort angepasste flachere Bauweise auf.

Im Übrigen sei auf die vorstehende Beschreibung der ersten Ausführungsform verwiesen.

## Patentansprüche

1. Oberlenker für einen Dreipunkt-Kraftheber eines landwirtschaftlichen Traktors, mit einem Zylinderkorpus (12), der einen Zylinderboden (14) mit einem Befestigungsauge (18) aufweist, an dem ein Kreuzgelenk (22) zur traktorseitigen Befestigung schwenkbar angebracht ist, wobei innerhalb des Zylinderbodens (14) eine von außen zugängliche Einschuböffnung (38) zur Aufnahme eines Sensormoduls (40) taschenförmig ausgebildet ist, wobei die Einschuböffnung (38) nach außen hin von einem Befestigungsflansch (50) begrenzt ist, der einen planebenen Oberflächenabschnitt (52) zur sitzdichten Anbringung des Sensormoduls (40) bildet, **gekennzeichnet durch** ein in der Einschuböffnung (38) aufgenommenes Sensormodul (40) in Gestalt einer inertialen Messeinheit zur Messung von Linearbeschleunigungen und/oder Winkelgeschwindigkeiten.

2. Oberlenker nach Anspruch 1, **dadurch gekennzeichnet, dass** das Kreuzgelenk (22) eine mit dem Befestigungsauge (18) fluchtende erste Schwenkachse (46) und eine dazu senkrechte zweite Schwenkachse (48) gegenüber einer mit dem Kreuzgelenk (22) schwenkbar verbindbaren traktorseitigen Befestigungsstelle bildet, wobei die Einschuböffnung (38) in Richtung einer der beiden Schwenkachsen (46, 48) oder in einem definierten Winkel dazu orientiert ist.

3. Oberlenker nach Anspruch 1 oder 2, **dadurch gekennzeichnet, dass** an dem Befestigungsflansch (50) Gewindeöffnungen (56, 58) zur Verschraubung eines an dem Sensormodul (40) ausgebildeten Befestigungskragens (60) eingebracht sind.

4. Verfahren zur Betriebszustandsklassifizierung eines an einem landwirtschaftlichen Traktor angebrachten Oberlenkers nach Anspruch 1 mit einer inertialen Messeinheit (40) nach Anspruch 1, wobei nach Maßgabe eines Vergleichs gemessener Linearbeschleunigungen und/oder Winkelgeschwindigkeiten in Bezug auf eine traktorseitige Befestigungsstelle die aktuelle Winkellage des Oberlenkers in vertikaler Richtung sowie deren zeitliche Änderung jeweils gegenüber der traktorseitigen Befestigungsstelle ermittelt wird sowie bei Erkennung einer festen, nahezu senkrechten Winkellage gegenüber dem landwirtschaftlichen Traktor auf eine Transportstellung des Oberlenkers; bei einer zeitlichen Veränderung der Winkellage gegenüber dem landwirtschaftlichen Traktor auf einen Anbauvorgang; und bei Erkennung einer festen, nahezu horizontalen Winkellage gegenüber dem landwirtschaftlichen Traktor auf eine Anbaustellung geschlossen wird.

## Claims

1. Top link for a three-point power lift of an agricultural tractor, having a cylinder body (12) that has a cylinder base (14) with a fastening eye (18) to which a universal joint (22) for fastening to the tractor is pivotably attached, wherein an externally accessible introduction opening (38) for receiving a sensor module (40) is formed in a pocket-like manner within the cylinder base (14), wherein the insertion opening (38) is bounded towards the outside by a fastening flange (50) that forms a planar surface portion (52) for attaching the sensor module (40) in a closely fitting manner, **characterized by** a sensor module (40), accommodated in the introduction opening (38), in the form of an inertial measurement unit for measuring linear accelerations and/or angular velocities.

2. Top link according to Claim 1, **characterized in that** the universal joint (22) forms a first pivot axis (46) aligned with the fastening eye (18), and a second pivot axis (48), perpendicular thereto, with respect to a tractor-side fastening point that is pivotably connectable to the universal joint (22), wherein the introduction opening (38) is oriented in the direction of one of the two pivot axes (46, 48) or at a defined angle thereto.

3. Top link according to Claim 1 or 2, **characterized in that** threaded openings (56, 58) for screw-fastening a fastening collar (60) formed on the sensor module (40) have been introduced into the fastening flange (50).

4. Method for classifying the operating state of a top link, according to Claim 1, attached to an agricultural tractor and having an inertial measurement unit (40) according to Claim 1, wherein, on the basis of a comparison of measured linear accelerations and/or angular velocities with respect to a tractor-side fastening point, the current angular position of the top link in a vertical direction and the change thereof over time are determined in each case with respect to the tractor-side fastening point, and in the event of identification of a fixed, virtually vertical angular position with respect to the agricultural tractor, a transport position of the top link is indicated; in the event of a change over time of the angular position with respect to the agricultural tractor, an attachment process is indicated; and in the event of identification of a fixed, virtually horizontal angular position with respect to the agricultural tractor, an attachment position is indicated.

## Revendications

1. Bras supérieur d'attelage pour dispositif de levage en trois points d'un tracteur agricole, comprenant un corps de cylindre (12) qui présente un fond de cylindre (14) doté d'un œillet de fixation (18) sur lequel un joint universel (22) est monté pivotant en vue d'une fixation côté tracteur, dans lequel, à l'intérieur du fond de cylindre (14), une ouverture d'insertion (38) accessible de l'extérieur pour recevoir un module de capteur (40) est réalisée sous forme de poche, l'ouverture d'insertion (38) étant délimitée vers l'extérieur par une bride de fixation (50) qui forme une partie de surface plane (52) pour un montage étanche du module de capteur (40), **caractérisé par** un module de capteur (40) reçu dans l'ouverture d'insertion (38) sous la forme d'une unité de mesure inertielle destinée à mesurer des accélérations linéaires et/ou des vitesses angulaires.

2. Bras supérieur d'attelage selon la revendication 1, **caractérisé en ce que** le joint universel (22) constitue un premier axe de pivotement (46) en alignement sur l'œillet de fixation (18) et un deuxième axe de pivotement (48) perpendiculaire à celui-ci à l'opposé d'un point de fixation côté tracteur pouvant être relié en pivotement au joint universel (22), l'ouverture d'insertion (38) étant orientée en direction d'un des deux axes de pivotement (46, 48) ou selon un angle défini par rapport à celui-ci.

3. Bras supérieur d'attelage selon la revendication 1 ou 2, **caractérisé en ce que** des ouvertures filetées (56, 58) sont pratiquées sur la bride de fixation (50) pour le vissage d'une collerette de fixation (60) réalisée sur le module de capteur (40).

4. Procédé de classification d'état de fonctionnement d'un bras supérieur d'attelage monté sur un tracteur agricole selon la revendication 1, comprenant une unité de mesure inertielle (40) selon la revendication 1, dans lequel, conformément à une comparaison d'accélérations linéaires et/ou de vitesses angulaires mesurées, la position angulaire actuelle du bras supérieur d'attelage dans la direction verticale ainsi que sa variation dans le temps par rapport à un point de fixation côté tracteur est déterminée respectivement à l'opposé du point de fixation côté tracteur, et en cas de détection d'une position angulaire fixe, pratiquement verticale, par rapport au tracteur agricole, une position de transport du bras supérieur d'attelage est déduite ; en cas de variation dans le temps de la position angulaire par rapport au tracteur agricole une opération d'attelage est déduite ; et en cas de détection d'une position angulaire fixe, pratiquement horizontale, par rapport au tracteur agricole une position d'attelage est déduite.
